Europäisches Patentamt

European Patent Office

Office européen des brevets

(19)

(11) Publication number: **0 011 913**
**B1**

(12) **EUROPEAN PATENT SPECIFICATION**

(45) Date of publication of patent specification: **23.02.83**

(51) Int. Cl.³: **F 16 B 21/04**

(21) Application number: **79301742.7**

(22) Date of filing: **24.08.79**

(54) Quick-release fastener.

(30) Priority: **29.11.78 US 964451**

(43) Date of publication of application:
**11.06.80 Bulletin 80/12**

(45) Publication of the grant of the patent:
**23.02.83 Bulletin 83/8**

(84) Designated Contracting States:
**AT BE CH DE FR GB IT LU NL SE**

(56) References cited:
**DE - A - 1 500 840**
**DE - A - 2 125 459**
**DE - C - 31 184**
**GB - A - 1 089 226**
**GB - A - 1 204 042**
**US - A - 2 477 818**
**US - A - 3 009 719**
**US - A - 3 675 280**

(73) Proprietor: **DZUS FASTENER EUROPE LIMITED**
**Farnham Trading Estate**
**Farnham Surrey, GU9 9PL (GB)**

(72) Inventor: **Gunther, Conrad Joseph**
**260, Bedford Avenue**
**Uniondale New York, 11553 (US)**

(74) Representative: **Brunner, Michael John et al,**
**Gill Jennings & Every 53/64 Chancery Lane**
**London WC2A 1HN (GB)**

Courier Press, Leamington Spa, England

## Quick-release fastener

The present invention relates to quick-release fasteners and more particularly to quarter-turn fasteners.

One type of well-known fastener is the so-called quarter-turn fastener. Some fasteners of this type have a stud, with a cam slot, coupled with a receptacle having a cam follower for mating with the cam slot. A quarter-turn rotation between the stud and receptacle once the cam follower and slot are aligned will shift the assembly between the opened and closed positions. Such a fastener will hereinafter be referred to as "of the kind described". These fasteners are used in mass numbers in environments such as the aircraft industry, for example, on large structures such as supersonic aeroplanes. One of the features of the quarter-turn fastener is ease of assembly and disassembly. This enables one to gain access to the enclosures in a rapid and efficient manner. Thus, any problem such as "hang up" or difficulty of reassembly of the components is of particular concern with quarter-turn fasteners which are often open and closed.

Consequently, an improved structure which assists in assembling fasteners and which avoids the problem of "hang up" between parts as they are disassembled would be extremely useful.

According to the invention a stud for a quick-release fastener of the kind described has a shank with a helical cam slot opening at one end of the shank and having an open end which is widened to facilitate coupling and uncoupling of the stud with a cam follower of a complementary fastener receptacle, characterized in that the open end of the cam slot is widened by relieving the cam slot at the leading edge by forming a helical rebate in the shank at an angle to the helix angle of the cam slot.

It is contemplated that the widened end of the slot can be formed by relieving the end in a manner such as by back milling the slot after it has been formed so that a portion is cut at the leading open end of the slot angled outward from the surface of the slot forming the normal radius of curvature. Each slot is cut along a conventional helix and it has been found effective to relieve each slot and for approximately 30 degrees from the leading edge of the open end of the slot. Naturally other means of forming the widened end are envisaged. The object is to relieve the slot for a short distance along its length at the entry end providing for a wider opening for introduction of the cam follower and avoiding the presence of sharp edges interfering with the introduction of the cam follower into the slot.

It is contemplated that the stud with the back milled end portion forming a widened opening also avoids the problem of "hang up" as the stud is rotated to the open position with the cam follower travelling from the locking detent to the end of the stud. The widened end of the slot avoids interference or "hang up" between the slot and the cam follower and the fastener is easily separated from the receptacle.

In one form, a pair of opposing complementing helical slots are formed on the shank, the pair of slots being positioned to mate with diametrically opposed inwardly extending cam follower tabs in a conventional receptacle.

The stud may also be provided with an inward chamfer around the peripheral portion of its entire leading tip. This facilitates introduction of the stud into the convention receptacle and also avoids the presence of sharp edges at the end thus alleviating the danger of "hang up". Thus, the chamfer cooperates with the relieved back milled end portion of the slot to avoid any interfering surfaces so that the cam follower in the receptacle can be quickly and efficiently disassembled from the stud.

One example of a stud according to the invention will now be described with reference to the accompanying drawings, in which:—

Figure 1 is a side elevation of the stud;

Figure 2 is a side elevation thereof from a direction at 90 degrees to the direction of Figure 1;

Figure 3 is a top plan view thereof;

Figure 4 is a bottom plan view thereof;

Figure 5 is a bottom plan view of the stud in position for introduction to a receptacle;

Figure 6 is a part-sectional view taken along the line 6—6 of Figure 5; and,

Figure 7 is a sectional elevation thereof, showing the elements of Figures 5 and 6 with the stud coupled with a receptacle.

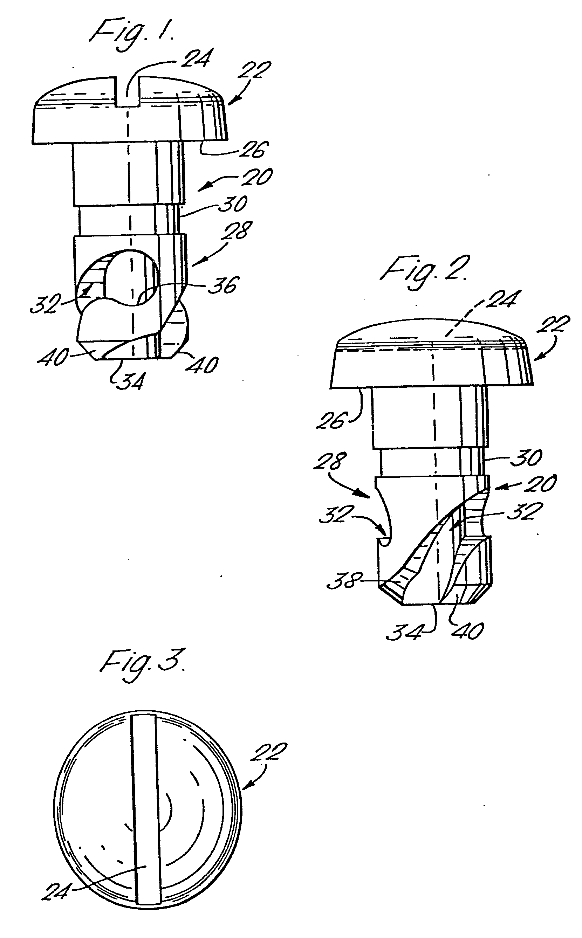

The stud 20, shown independent of a receptacle in Figures 1—4, includes an enlarged head 22 with a slot 24 in its upper surface for insertion of a tool to rotate the stud between the locked and unlocked positions. Extending from the underside 26 of the enlarged head 22 is a reduced diameter shank 28, and intermediate the ends of the shank in the depicted embodiment is a groove 30 for facilitating the mounting of the stud for use on a conventional type of panel arrangement.

The end portion of the shank 28 distal from the head 22 includes a pair of diametrically opposite helical cam slots 32. Each slot 32 is cut from the leading end 34 of the shank 28 and extends along the shank towards the head terminating in a locking detent 36.

It is usually found effective to cut each slot 32 by a common type of milling process particularly when the material for the stud is a hard material such as zinc plated steel. Normally each slot 32 would be cut with a constant width from its mouth until the point of the locking detent 36 is reached at which point the depression (as seen in Figure 1) is cut for seating of the cam follower of an associated receptacle. However, in accordance with the present invention the mouth of each slot 32 is widened to facilitate entrance and removal of the stud in its receptacle by avoiding difficulty in assembly and the danger of "hang up" between parts when the stud is removed from its receptacle. An effective way of providing the widened portion is to back mill each slot 32 at its mouth to form a widened lead-in zone 38. It has been found effective to back mill each slot for approximately 30 degrees from it leading edge at the mouth of the slot. The lead-in zone is formed as a helical rebate with a helix angle different to the helix angle of the slot 32.

Another feature of the leading end of the fastener 20 which facilitates introduction of the fastener to a receptacle and helps to avoid "hang up" as the fastener is removed is the presence of a beveled or chamfered end portion 40. Chamfered end portion 40 and widened back milled or relieved lead-in portion 38 of each slot 32 cooperate to facilitate introduction of the stud to and removal from the receptacle.

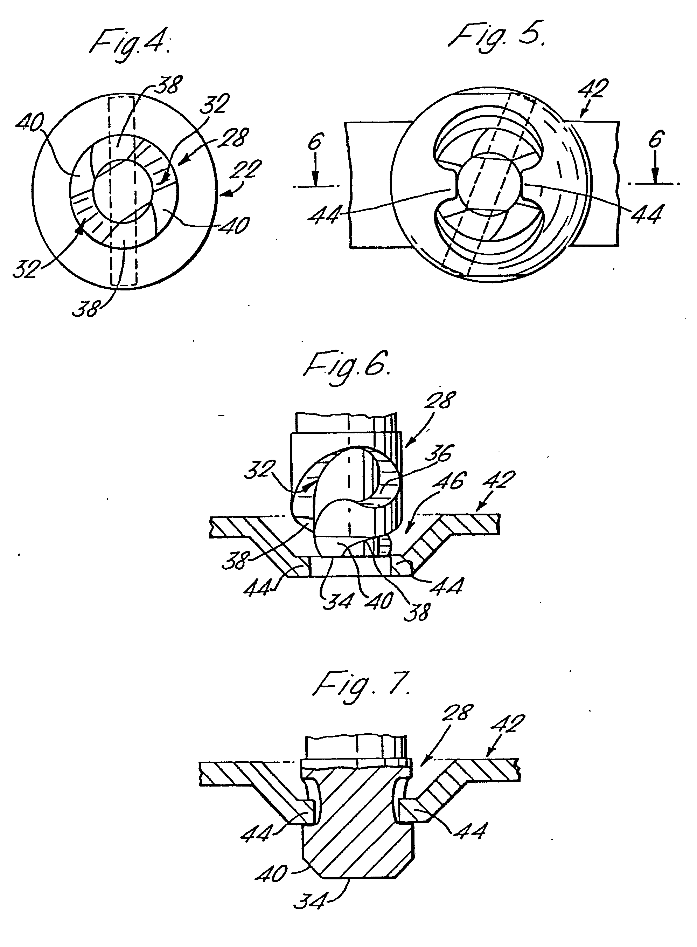

Figures 5—7 show the assembling procedure for the stud 20 with a conventional type of receptacle 42. Only the operative portion of the receptacle is shown in the drawing. The receptacle is a conventional type of circular receiving housing for the cylindrical shank 28 of the stud and has diametrically opposed inwardly extending cam followers 44 in the form of a pair of tabs directed across the housing. Thus, as the fastener is introduced through the upper open end 46 of the receptacle it comes into contact with the cam follower tabs 44 which can be aligned with the entrance to slots 32 or the leadin portions 38 by a slight initial rotation of the fastener 20 to reach the proper position. An appropriate tool such as a screw-driver is introduced into slot 24 in head 22 of the stud and the stud is rotated the approximate 1/4 turn to cause cam followers 44 to travel axially along the respective helical slots 32 until they seat in respective locking detents 36. Appropriate spring action is provided in the receptacle or on the stud (not shown) for accommodating the relative axial movement of the cam follower and the stud in travelling to the locking position.

Disassembly is accomplished in a similar quick and efficient manner by introducing a screwdriver into slot 24 and rotating the stud 20 in the opposite direction with respect to the receptacle so that cam followers 44 are displaced from locking detents 36 and travel axially along slots 32 until they are free of the slots at which time the stud can be withdrawn from opening 46 in the circular housing of the receptacle thus permitting quick disassembly of the elements. A quarter-turn is all that is required for disassembly similar to the assembling procedure.

The beveled forward end 40 forms an effective leading portion to avoid any interference with the surrounding edges of the rim of the receptacle to facilitate introduction of stud 20 into the tubular receiving housing of the receptacle. Similarly when the stud reaches the cam followers 44, the widened or lead-in portion 38 of each slot 32 provides a wider opening for properly and easily locating each tab 44 in the entrance to a slot. Thus, changes of interference between the tab and sharp edges at the entrance to the slot are minimized.

Similarly, when the fastener is disassembled, the absence of sharp edges at the end of the slots with the presence of the relieved back milled widened portions 38 avoids "hang up" and permits free and easy removal of the cam follower tabs from the slots and the stud. Once again the beveled or chamfered end portion 40 avoids any interfering surfaces between the stud and the receptacle as the stud is withdrawn from the receptacle housing through the open end 46.

The manufacturing procedure for the stud with relieved or back milled lead-in portions 38 can be accomplished in a quick and efficient manner. Each slot is formed and then back milled at its starting end for a predetermined distance such as approximately 30 degrees of the helical turn of the slot. In this manner, manufacturing costs are maintained at a minimum while gaining the advantage of the improved fastener, that is by facilitating assembly of the fastener with the receptacle and dissassembly there from without danger of "hang up".

In an alternative design a single through cam slot is provided in the end of the shank for coupling with a single cross-pin acting as a cam follower in a conventional receptacle. Again a widened zone would be formed at the mouth of the slot such as by back milling or a similar procedure.

**Claims**

1. A stud for a quick-release fastener of the kind having a stud (20) with a cam slot (32) coupling with a receptacle (42) having a cam follower (44) for mating with the cam slot, the stud having a shank (28) with a helical cam slot (32) opening at one end of the shank and having an open end which is widened (38) to facilitate coupling and uncoupling of the stud with a cam follower (44) of a complementary fastener receptacle (42), characterized in that the open end of the cam slot (32) is widened by relieving the cam slot at its leading edge by forming a helical rebate in the shank (28) at an angle to the helix angle of the cam slot.

2. A stud according to claim 1, characterized in that the end of the shank (28) at which the cam slot (32) opens has a peripheral chamfer (40) to facilitate coupling of the stud (20) with the corresponding receptacle (42).

3. A stud according to claim 1 or claim 2, which includes a second helical cam slot (32) formed diametrically opposite the first cam slot.

4. A quick release fastener comprising a stud (20) according to any of the preceding claims, and a receptacle (42) having a cam follower (44) for mating with the cam slot (32) to secure the receptacle and stud together.

5. A method of forming a stud constructed in accordance with claim 1, the method comprising cutting a helical cam slot (32) in a substantially cylindrical shank (28) extending from one end thereof, and widening the open end of the slot (32) by relieving the cam slot at its leading edge by forming a helical rebate in the shank at an angle to the helix angle of the slot (32).

6. A method according to claim 5, in which the end of the shank (28), from which extends the slot (32) is chamfered (40).

## Revendications

1. Un boulon pour un élément de fixation à libération instantanée du type comportant un boulon (20) formant came s'accouplant avec un réceptacle (42) comportant un moyen (44) suiveur de came destiné à coopérer avec la fente formant came, le boulon comportant une tige (28) pourvu d'une fente hélicoïdale (32) formant came, débouchant à une des extrémités de la fente et comportant une extrémité ouverte qui est élargie (38) de manière à faciliter l'accouplement et le désaccouplement du boulon avec un moyen (44) suiveur de came d'un réceptacle complémentaire (42) d'élément de fixation, caractérisé en ce que l'extrémité ouverte de la fente (32) formant came est élargie par dégagement de cette fente à son bord avant grâce à la formation d'une feuillure ou encoche hélicoïdale dans la tige (28) suivant un angle par rapport à l'angle d'hélice de la fente formant came.

2. Un boulon suivant la revendication 1, caractérisé par le fait que l'extrémité de la tige (28) où débouche la fente (32) formant came comporte un chanfrein périphérique (40) de manière à faciliter l'accouplement du boulon (20) avec le réceptacle correspondant (42).

3. Un boulon suivant les revendications 1 ou 2, qui comprend une seconde fente hélicoïdale (32) formant came ménagée de façon diamétralement opposée à la première fente formant came.

4. Elément de fixation â libération instantanée comprenant un boulon (20) suivant l'une quelconque des revendications précédentes, et un réceptacle (42) comportant un moyen (44) suiveur de came destiné à coopérer avec la fente (32) formant came pour fixer l'un à l'autre le réceptacle et le boulon.

5. Procédé pour former un boulon réalisé suivant la revendication 1, ce procédé consistant à tailler dans une tige (28) sensiblement cylindrique une fente hélicoïdale (32) formant came et s'étendant à partir d'une des extrémités de cette tige, et à élargir l'extrémité ouverte la fente (32) an dégageant la fente formant came à son bord avant par formation d'une feuillure ou encoche hélicoïdale dans la tige suivant un angle par rapport à l'angle d'helice de la fente (32).

6. Procédé suivant la revendication 5, dans lequel on forme un chanfrein (40) dans l'extrémité de la tige (28) à partir de laquelle s'étend la fente (32).

## Patentansprüche

1. Bolzen für einen Schnellverschluß von der Art, bei der ein mit einem Verriegelungsschlitz (32) versehener Bolzen (20) an einem Verschlußteil (42) mit einem in den Verriegelungsschlitz eingreifenden Schließstück (44) befestigt wird, wobei der Bolzen einen Schaft (28) mit einem wendelförmigen Verriegelungsschlitz (32) aufweist, der sich an dem einen Ende des Schaftes öffnet und dessen offenes Ende zur Erleichterung des Eingreifens und Freikommens des Bolzens mit bzw. von einem Schließstück (44) eines Gegen-Verschlußteils (42) aufgeweitet (38) ist, dadurch gekennzeichnet, daß das offene Ende des Verriegelungsschlitzes (32) durch Abtragen des Verriegelungsschlitzes an seiner einführenden Kante in Form eines wendelförmigen Freischnitts in dem Schaft (28) unter einem Winkel au dem Wendelwinkel des Verriegelungsschlitzes aufgeweitet ist.

2. Bolzen nach Anspruch 1, dadurch gekennzeichnet, daß das Ende des Schaftes (28), an dem sich der Verriegelungsschlitz (32) öffnet, eine umlaufende Phase (40) zur Erliechterung der Befestigung des Bolzens (20) mit dem korrespondierenden Verschlußteil (42) aufweist.

3. Bolzen nach Anspruch 1 oder 2, der einen zweiten wendeleförmigen Verriegelungsschlitz (32) enthält, der diametral gegenüberliegend zu dem ersten Schlitz eingeformt ist.

4. Schnellverschluß mit einem Bolzen (20) nach einem der vorhergehenden Ansprüche und mit einem Verschlußteil (42), das ein Schließstück (44) zum Eingriff mit dem Schlitz (32) aufweist, um das Verschlußteil und den Bolzen aneinander zu befestigen.

5. Verfahren zur Formgebung eines nach dem Anspruch 1 aufgebauten Bolzens, bei dem ein wendelförmiger Verriegelungsschlitz (32) in einen im wesentlichen zylindrischen Schaft (28) geschnitten wird, der sich von dem einen Ende des Schaftes erstreckt und bei dem das offene Ende des Verriegelungsschlitzes (32) durch Abtragen des Verriegelungsschlitzes an der einführenden Kante in Form eines wendelförmigen Freischnitts in dem Schaft unter einem Winkel zu dem Wendelwinkel des Schlitzes (32) aufgeweitet wird.

6. Verfahren nach Anspruch 5, bei dem das Ende des Schaftes (28), von dem aus sich der Verriegelungsschlitz (32) erstreckt, angephast (40) wird.

Fig.1.

Fig.2.

Fig.3.

Fig.4.

Fig. 5.

Fig.6.

Fig. 7.